(19) Europäisches Patentamt
European Patent Office
Office européen des brevets

(11) **EP 2 109 333 B1**

(12) **EUROPEAN PATENT SPECIFICATION**

(45) Date of publication and mention
of the grant of the patent:
**17.03.2010 Bulletin 2010/11**

(51) Int Cl.:
***H04W 24/10*** *(2009.01)*     *H04W 56/00* *(2009.01)*
***H04W 92/20*** *(2009.01)*

(21) Application number: **08305091.4**

(22) Date of filing: **09.04.2008**

(54) **Measurement preparation and execution method and apparatus in a radio communication system**

Verfahren und Vorrichtung zur Vorbereitung und Ausführung von Messungen in einem Funkkommunikationssystem

Préparation de mesures et procédé d'exécution et appareil dans un système de communications radio

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**14.10.2009 Bulletin 2009/42**

(73) Proprietor: **Alcatel Lucent**
**75008 Paris (FR)**

(72) Inventors:
• **Hofmann, Dirk**
**74321 Bietigheim-Bissingen (DE)**

• **Buné, Paul A.M.**
**70806 Kornwestheim (DE)**

(74) Representative: **Brose, Gerhard**
**Alcatel Lucent**
**Intellectual Property & Standards**
**70430 Stuttgart (DE)**

(56) References cited:
**EP-A- 0 886 453     EP-A- 0 892 571**
**WO-A-01/20940     DE-U1-202005 010 882**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD OF THE INVENTION

The invention relates to a method for preparing and executing measurements at mobile stations to measure the signal quality of received beacons transmitted from neighbouring base stations in a radio communication system according to the preamble of claim 1, to such radio communication system according to the preamble of claim 8, to a first base station for use in such radio communication system according to the preamble of claim 9, and to a mobile station for use in such radio communication system according to the preamble of claim 10.

## BACKGROUND OF THE INVENTION

In a radio communication system such as a GSM/GPRS or UMTS/HSPA mobile radio network, a mobile station performs measurements regarding the radio link quality of neighbouring base stations if the radio link to its serving base station is getting worse or fallen below a specific threshold. Such measurements are performed to find an adequate target base station which can take on the active services of the mobile station using a handover procedure.

The available time to perform such measurements is limited for the following circumstances:

1. In a case of abrupt signal degradation of the active radio link between the mobile station and serving base station a neighbouring base station must be found very quickly to achieve a seamless or lossless handover procedure to this base station.

2. In heterogeneous mobile radio networks, in which radio access networks with different radio access technologies are overlayed or in homogeneous mobile radio networks with hierarchical cell structures, the number of suitable neighbouring base stations for taking over the services increases. To find the most suited neighbouring radio cell in terms of quality of service (quality of service = QoS), measurement procedures for several candidate radio cells should be carried out.

To enable these measurements and to enable a synchronization at the mobile station in relation to a base station each base station broadcasts periodically beacons or pilots. The notion beacon will be used in the following for both, beacon and pilot.

Normally, the base stations are not synchronized to each other. Hence, the mobile station with a single receiver chain cannot receive beacons of a neighbouring base station in parallel to the reception of data from a serving base station even if the serving base station and the neighbouring base station use the same frequency or the same frequency band. Thus, the mobile station must synchronize to the neighbouring base station loosing synchronization to the serving base station. Therefore, the data transmission between the mobile station and the serving base station must be interrupted shortly for the duration of the measurement procedure. An interruption induced by such a measurement should fulfil the QoS requirements of the active services of the mobile station. Especially for a real-time service such as voice over IP a one-way latency (mouth to ear) of more than 150 ms and packet loss of two or more packets in a 20 ms (default) packetization interval results in a noticeable degradation of voice quality. Therefore, the transmission interruption for a single measurement time slot has to be limited to definitely less than 40 ms. A typical beacon period in for example a wireless local area network is 100 ms.

The duration of the measurement procedure at the mobile station depends on the time needed to synchronize the measurement time slots at the mobile station with the beacons sent by the neighbouring base station.

Dependent on the maximum measurement time slot (e.g. 40 ms as mentioned above) and the time gap between the beacons (e.g. 100 ms as mentioned above), it is possible that there is no time overlap between the measurement time and the next beacon airtime by using only one measurement time slot. In this case several measurement time slots with relevant data transmission interruptions have to be used and therefore, the complete measurement procedure con take up to a second or more.

DE 20 2005 010 882 U1 discloses a method for neighbour scanning in a wireless local area network having a station, a first access point to which the station is associated, and a second access point begins generating timing information regarding a beacon signal sent by the second access point. The timing information is reported from the first access point to the station. The station schedules a time, based on the timing information, to listen for the beacon signal transmitted by the second access point.

## OBJECT OF THE INVENTION

A long measurement procedure for only one neighbouring base station results in a very limited number of neighbouring base stations which can be evaluated in a reasonable time and can result in a loss or delay of data, if the radio link to the serving base station degrades in a too fast way.

Furthermore, measurement time is wasted on the one hand between the starting time of the measurement time slot and the reception time of the beacon and on the other hand between the reception time of the beacon and the ending time of the measurement time slot.

It is favourable if the mobile station has knowledge about the airtime of the beacons broadcasted by neighbouring base stations. In such a case adverse effects on the running services can be minimised and the power consumption related to measurements of neighbouring base station can be reduced.

We have in-house knowledge about a method of optimizing measurement duration in a telecommunications network. Such telecommunications network comprises a first base station connected to a first radio network, at least a second base station connected to a second radio network, a core network connected to the first and second radio network and a database coupled to the core network. The relevant steps according to this method are: sending at least a second beacon period information belonging to the second base station from the second base station to the database, storing the second beacon period information on the database, sending a request of the second beacon period information from the first base station to the database, generating a response of the second beacon period information belonging to the second base station from the database to the first base station, forwarding the response received at the first base station to the mobile station and adjusting measurements periods on the mobile station based on the response of the beacon period information. This method works especially for heterogeneous mobile networks like 3GPP SAE with base stations located in different radio access networks.

This optimization method shortens the measurement duration but requires a database as an additional network element. Such database induces additional asset costs and requires signalling effort from the base stations to the database and from the database to the base stations.

## SUMMARY OF THE INVENTION

For optimizing the preparation and execution of measurements especially in homogeneous radio communication systems with base stations using the same radio access technology, a method and a radio communication system, base stations and a mobile terminal performing said method are described in this invention.

The present invention provides a method for preparing and executing of measurements at mobile stations to measure the signal quality of received beacons transmitted from neighbouring base stations in a radio communication system, said radio communication system comprising a radio access network with a first base station, at least one second base station, and at least one mobile station, said first base station being a serving base station of said one of said mobile stations, said one of said second base stations broadcasting beacons repeatedly, the method comprising the steps of: transmitting beacon timing data from said one of said second base stations to said first base station, transmitting said beacon timing data or recalculated beacon timing data from said first base station to said one of said mobile stations, and adjusting at least one time slot for performing a measurement on said beacons at said one of said mobile stations using said beacon timing data or recalculated beacon timing data, wherein when said first base station is connected to said one of said second base stations via a direct communication link transmitting said beacon timing data via said direct communication link from said one of said second base stations to said first base station.

It is to be noted, that such direct communication links are known, e.g. from the overall architecture of E-UTRAN described in 3GPP TS 36.300 V8.2.0 (2007-09) with X2 interfaces between base stations (eNBs).

By using such a method the beacon timing data are sent directly from the second base station to the first base station avoiding the detour via a database and avoiding the need of the database as an additional network element. This property accelerates the preparation and execution process of the measurement. The beacon timing data can be requested by the first base station, it can be requested by the mobile station via the first base station, it can be sent periodically by the second base station to the first base station, it can be stored temporarily at the first base station or any other method can be used in accordance with the invention.

Time adaptation (or time synchronization) is required at the first base station and at the mobile station between the beacon timing data and the system time used at the first base station and the mobile station, because the beacon timing data are based on the system time of the second base station and the system times of the second base station, the first base station and the mobile station differ in general. If the mobile station receives beacon timing data and the system time of the mobile station is different to the system time of the second base station, the mobile station is not able to adjust in an accurate way a single measurement time slot to the airtime of one of the next beacons broadcasted by the second base station. Furthermore, if the first base station receives beacon timing data and the system time of the first base station is different to the system time of the second base station, the first base station is not able to schedule at said first base station at least one transmission break for data of said one of said mobile stations in an accurate way.

Time adaptation at the mobile station and the first base station can be based on a comparison of system times taking into account the transmission and processing time delay for the transmission of the beacon timing data between the transmitting nodes and the receiving nodes if necessary, it can be based on system times adapted to a time reference, which is generated by satellite or ground based timing modules or it can be based on any other method not explicitly mentioned in this invention.

## BRIEF DESCRIPTION OF THE DRAWINGS

Other characteristics and advantages of the invention will become apparent in the following detailed description of preferred embodiments of the invention. The preferred embodiments of the invention will be illustrated by the accompanying drawings given by way of non-limiting illustrations.

Figure 1 is a schematic illustration in the prior art of a method for executing measurements at mobile stations to measure the signal quality of beacons periodically broadcasted from neighbouring base stations.

Figure 2 shows a first block diagram of a radio communication system to measure the signal quality of received beacons transmitted from neighbouring base stations in accordance with a first preferred embodiment of the invention.

Figure 3 shows a method for preparing and executing measurements at mobile stations to measure the signal quality of received beacons transmitted from neighbouring base stations in the radio communication system of Figure 2 in accordance with the first preferred embodiment of the invention.

Figure 4 is a schematic illustration of two time diagrams according to the method of Figure 3 for preparing and executing measurements at mobile stations to measure the signal quality of received beacons transmitted from neighbouring base stations in the radio communication system of Figure 2 in accordance with the first preferred embodiment of the invention.

Figure 5 shows a method for preparing and executing measurements at mobile stations to measure the signal quality of received beacons transmitted from neighbouring base stations in the radio communication system of Figure 2 in accordance with a second preferred embodiment of the invention.

Figure 6 shows a method for preparing and executing measurements at mobile stations to measure the signal quality of received beacons transmitted from neighbouring base stations in the radio communication system of Figure 2 in accordance with a third preferred embodiment of the invention.

Figure 7 shows a second block diagram of a radio communication system for preparing and executing measurements at mobile stations to measure the signal quality of received beacons transmitted from neighbouring base stations in accordance with a fourth preferred embodiment of the invention.

Figure 8 shows a method for preparing and executing measurements at mobile stations to measure the signal quality of received beacons transmitted from neighbouring base stations in the radio communication system of Figure 7 in accordance with the fourth preferred embodiment of the invention.

## DETAILED DESCRIPTION OF THE INVENTION

In a method according to the prior art, a neighbouring base station broadcasts beacons periodically. A mobile station with a single receiver and an active session can perform measurements on these beacons not in a single step with a long measurement time slot as long as the next beacon is received but with several steps using short measurement time slots, in which the active session is shortly interrupted. These short measurement time slots are used until one of the next beacons is received.

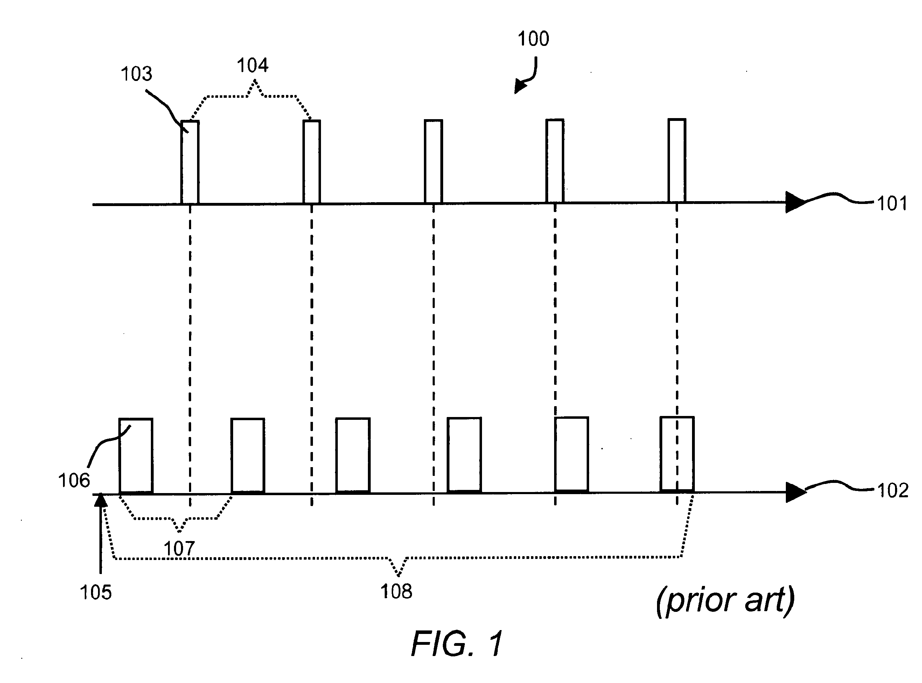

Figure 1 shows a schematic illustration 100 of the method in the prior art with two time diagrams 101 and 102. In time diagram 101 a base station sends beacons 103 using a beacon period 104, with a typical value range between 10 ms and 100 ms for the beacon period. In the time diagram 102 a mobile station starts a measurement procedure initiated by a measurement trigger 105. The mobile station performs measurements at time slots 106 to receive either of the beacons 103. The time slots 106 are arranged with a slightly different period 107 to have a sliding window in relation to the beacons 103. The measurement procedure by the mobile station has to be executed until at least one beacon 103 and one time slot 106 coincide. The transmission time of the beacons from the base station to the mobile station for a typical line of sight distance of 1.5 km is around 5 microseconds. In comparison to the value of the beacon period the time shift, when the beacons are received at the mobile station can be neglected. As Figure 1 shows, the whole measurement procedure 108 is not finished with the first beacon sent after the measurement trigger. Normally, several beacon periods will elapse until the mobile station can receive and measure one beacon.

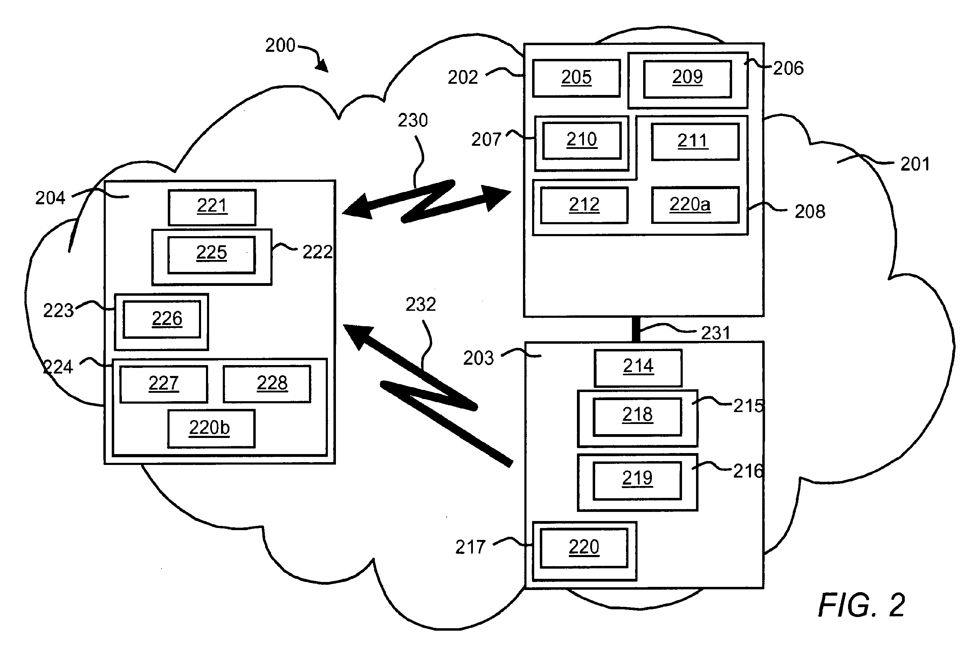

The basic idea of the invention is, that a mobile station can shorten the whole measurement procedure if the mobile station has knowledge about the airtime of the beacons broadcasted by the base station by receiving beacon timing data. The beacon timing data consist of time information of the next beacons and this time information is correlated with the system time of the base station. A more detailed description of the beacon timing data is given in the following description according to Figure 2.

In general each electronic device with a central processing unit (CPU = central processing unit) is also equipped with a system time clock, which provides a system time. In accordance with a first embodiment of the invention the system times of a first base station, a second base station and a mobile station are not synchronized in general. Therefore, in addition to transmitting the beacon timing data from the second base station to the mobile station via the first base station an adaptation mechanism is required, which ensures that the time information of the beacon timing data used by the mobile station is adapted to the system time of the mobile station prior to perform the measurement procedure.

One possibility for such an adaptation mechanism, which requires no additional hardware components in the network nodes of a radio communication system is to transmit system time information between the network nodes involved in performing the invention. In this case, it is required that system time information is transmitted at an arbitrary point in time prior to the transmission of the beacon timing data or at the same time as the transmission of beacon timing data happens. In the first preferred embodiment of the invention, the system time information is transmitted to the base station or mobile station at the same time as the beacon timing data is transmitted. The first base station knows the transmission and processing time delay for sending the system time information from the second base station to the first base station and the mobile station knows the transmission and processing time delay for sending the system time information from the first base station to the mobile station. In a first step, the time information of the beacon timing data is adapted at the first base station to the system time of the first base station and in a second step, the time information of the beacon timing data is adapted at the mobile station to the system time of the mobile station. The method according to the first embodiment of the invention allows to use different system times at the first base station, the second base station and the mobile station.

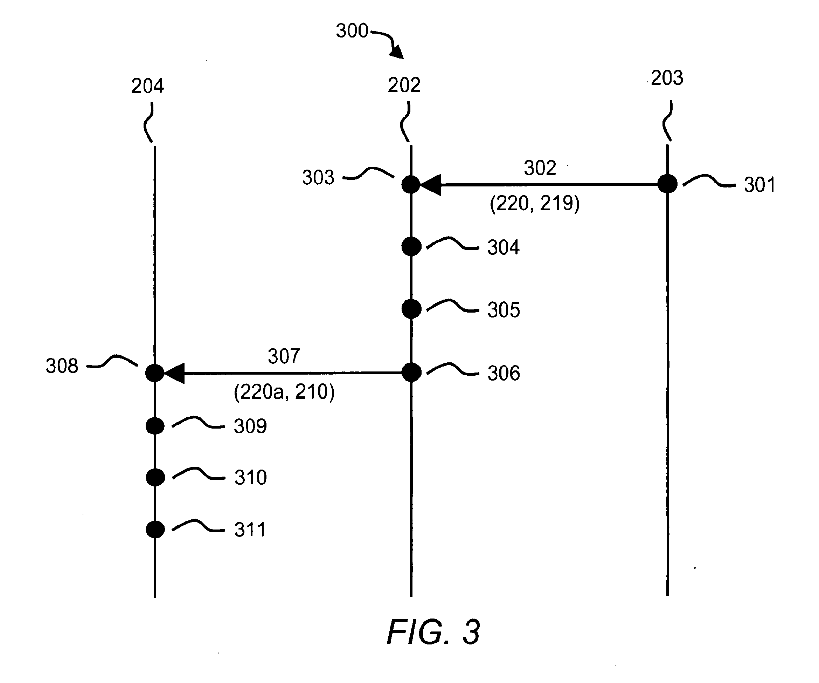

Figure 2 shows a first block diagram of a radio communication system 200 in accordance with the first preferred embodiment of the invention. Figure 3 shows in a sequence of operation diagram 300 a method for preparing and executing measurements at mobile stations to measure the signal quality of received beacons broadcasted from neighbouring base stations performed in the radio communication system 200 shown in Figure 2.

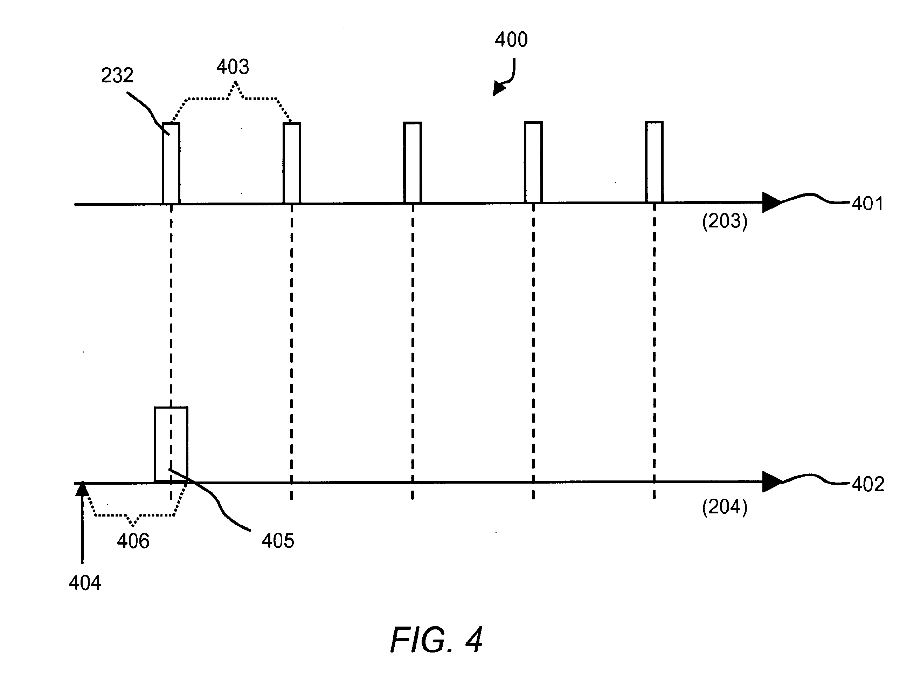

Figure 4 shows a schematic illustration 400 to explain the adjustment step of the method of Figure 3 performed at mobile stations.

The radio communication system 200 of Figure 2 includes a radio access network 201 with a first base station 202, a second base station 203, and a mobile station 204. Further base stations and mobile stations can be included to the radio communication system 200 but are not shown for simplification.

The first base station 202 comprises a first central processing unit (central processing unit = CPU) 205, a first storage medium 206, a first system time clock 207, and a first register 208. The first storage medium 206 is foreseen for storing a first executable program 209, which is foreseen for executing steps of a method performed in the first base station 202 according to the first embodiment of the invention. The first CPU 205 is foreseen for executing the first executable program 209. The first system time clock 207 is foreseen for providing a first system time 210. The first register 208 is foreseen for storing a calculated first system time offset 21 between a second system time 218 of the second base station 203 and the first system time 210, a known first transmission and processing time delay 212 between the second base station 203 and the first base station 202 and first recalculated beacon timing data 220a.

The second base station 203 comprises a second CPU 214, a second storage medium 215, a second system time clock 216 and a second register 21 7. The second storage medium 215 is foreseen for storing a second executable program 218, which is foreseen for executing steps of a method performed in the second base station 203 according to the first embodiment of the invention. The second CPU 214 is foreseen for executing the second executable program 218. The second system time clock 216 is foreseen for providing a second system time 219. The second register 217 is foreseen for storing beacon timing data 220. The beacon timing data 220 consist of time information of next beacons to be sent by the second base station 203. This time information can consist of time stamps t_b for specific beacons to be sent in the future or it can consist of one time stamp t_b and a beacon period b_p or another combination of time parameters. The time information is based on the second system time 219 of the second base station 203.

The mobile station 204 comprises a third CPU 221, a third storage medium 222, a third system time clock 223, and a third register 224. The third storage medium 222 is foreseen for storing a third executable program 225, which is foreseen for executing steps of a method performed in the mobile station 204 according to the first embodiment of the invention. The third CPU 221 is foreseen for executing the third executable program 225. The third system time clock 223 is foreseen for providing a third system time 226. The third register 224 is foreseen for storing a calculated second system time offset 227 between the first system time 210 and the third system time 226, a known second transmission and processing time delay 228 between the first base station 202 and the mobile station 204 and second recalculated beacon timing data 220b.

The mobile station 204 is connected to the first base station 202 via a radio link 230. The first base station and the second base station are connected via a direct communication link 231. The second base station 203 is foreseen for broadcasting beacons 232, which can be received and measured by the mobile station 204.

The elements in the embodiment shown in figure 3 that correspond to elements of the embodiment of figure 2 have been designated by the same reference numerals.

The sequence of operation diagram 300 depicts steps 301, 303, 304, 305, 306, 308, 309, 310, 311 performed and messages 302, 307 exchanged between the first base station 202, the second base station 203 and the mobile station 204.

In a first step 301, the second base station 203 transmits the beacon timing data 220 stored in the second register 217 and the current second system time 219 in a message 302 to the first base station 202 via the direct communication link 231. In a next step 303, the first base station 202 receives the message 302. In a further step 304, the first base station 202 calculates the first system time offset 211 in consideration of its own first system time 210, the received second system time 219 and the stored first transmission and processing time delay 212 using the following equation:

$$211 = 210 - (219 + 212)$$

In a next step 305, the first base station 202 recalculates the time information respectively the time stamps t_b of the beacon timing data 220 in consideration of the calculated first system time offset 211 and calculates time stamps t_b_a using the following equation and stores the result as first recalculated beacon timing data 220a in the first register 208:

$$t\_b\_a = t\_b - 211$$

In a further step 306 the first base station 202 transmits the first recalculated beacon timing data 220a stored in the first register 208 and the current first system time 210 in a message 307 to the mobile station 204. The mobile station 204 receives the message 307 in a next step 308. In a further step 309, the mobile station 204 calculates the second system time offset 227 in consideration of its own third system time 226, the received first system time 210 and the known second transmission and processing time delay 228 using the following equation:

$$227 = 226 - (210 + 228)$$

In a next step 310, the mobile station 204 recalculates the time information respectively the time stamps t_b_a of the beacon timing data 220 in consideration of the calculated second system time offset 227 and calculates time stamps t_b_b using the following equation and stores the result as second recalculated beacon timing data 220b in the third register 224:

$$t\_b\_b = t\_b\_a - 227$$

In a final step 311, the mobile station 204 adjusts at least one time slot to be able to measure at least one of the next beacons 232 broadcasted by the second base station 203 using the second recalculated beacon timing data 220b. This adjustment is clarified in the next paragraph with the description according to figure 4.
Figure 4 shows a schematic illustration 400 of two time diagrams 401 and 402 according to the method of figure 3 for preparing and executing measurements at mobile stations to measure the signal quality of received beacons transmitted from neighbouring base stations in the radio communication system of figure 2 in accordance with the first preferred embodiment of the invention. The elements in the embodiment shown in figure 4 that correspond to elements of the embodiment of figure 2 have been designated by the same reference numerals.
In time diagram 401 the second base station 203 sends beacons 232 using a beacon period 403. The beacon period 403 can have the same value at all base stations or the base stations can use different values for the beacon period 403 according to the specification of the radio access technology in use.
In time diagram 402 an adjusted measurement period of the mobile station 204 is shown. When the mobile station 204 is required to measure the beacons 232 of the second base station 203, the mobile station 204 receives the first recalculated beacon timing data 220a and the first system time 210 and recalculates the time information respectively the time stamps of the received first recalculated beacon timing data 220a prior to the measurement and stores the result as beacon timing data 220b as explained in the description of Figure 3. The second recalculated beacon timing data 220b contain time shifted airtime information about the beacons 232. Once the second recalculated beacon timing data 220b are available at the mobile station 204 at a point in time 404, which can be a measurement trigger, the mobile station 204 adjusts at least one measurement time slot 405 to coincide with the airtime of one of the next beacons 232 to be broadcasted by the second base station 203 according to the second recalculated beacon timing data 220b. In comparison to the first measurement time slot 106 of figure 1, the measurement time slot 405 of figure 4 has been time shifted to the airtime of the next beacon 232 sent by the second base station 203. Therefore, the duration of a measurement procedure 406 according to the first embodiment of the invention is much shorter than the duration of the measurement procedure 108 shown in figure 1 describing the measurement procedure in the prior art.
In a second preferred embodiment of the invention the method is initiated by a request for said beacon timing data originated on said one of said mobile stations. The mobile station originated beacon timing data request presumes that the mobile station already has information about the existence of the second base station. Such information can be received in advance of any measurement execution e.g. via broadcasted or dedicated neighbourhood information.
Such mobile station originated beacon timing data request will be preferably used if said one of said mobile stations has a second completely independent receiver chain or even a second completely independent transceiver chain. Whereas the second completely independent receiver chain is usually of the same radio access technology as the first transceiver chain, a second completely independent transceiver chain can be of the same but also of another radio access technology as being used by multi-radio capable mobile stations for heterogeneous mobile networks. Such mobile stations with a second completely independent receiver chain or a second completely independent transceiver chain are able to perform measurements on beacons of the second base station without interruptions of the data transmission between the mobile station and the first base station but a long measurement procedure with the second completely independent receiver or transceiver chain unnecessary consumes too much electrical resources. Therefore, it is advantageous if the duration of the measurement procedure can be shortened.

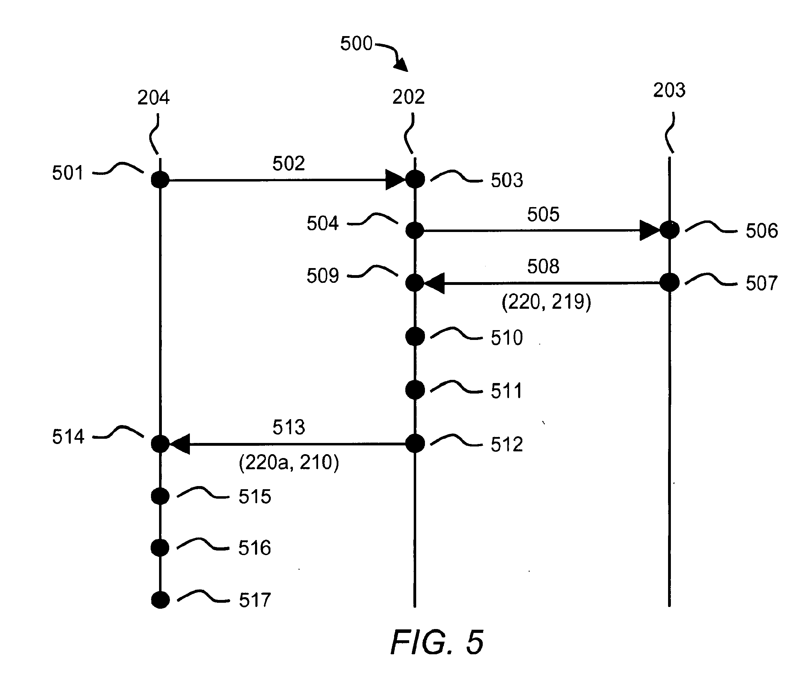

Figure 5 shows in a sequence of operation diagram 500 a method for preparing and executing measurements at mobile stations to measure the signal quality of received beacons transmitted from neighbouring base stations in the radio communication system of figure 2 in accordance with the second preferred embodiment of the invention. The elements in the embodiment shown in figure 5 that correspond to elements of the embodiment of figure 2 have been designated by the same reference numerals.

The sequence of operation diagram 500 depicts steps 501, 503, 504, 506, 507, 509, 510, 511, 512, 514, 515, 516, 517 performed and messages 502, 505, 508, 513 exchanged between the first base station 202, the second base station 203 and the mobile station 204.

In a first step 501, the mobile station 204 transmits a beacon timing data request 502 to the first base station 202. In a next step 503, the first base station 202 receives the beacon timing data request 502. In a further step 504, the first base station 202 forwards the beacon timing data request 502 in a message 505 to the second base station 203. In a next step 506, the second base station 203 receives the message 505. In a further step 507, the second base station 203 transmits a beacon timing data answer 508 with the beacon timing data 220 and the current second system time 219 to the first base station 202. In a next step 509, the first base station 202 receives the beacon timing data answer 508. In a further step 510, the first base station 202 calculates the first system time offset 211 in consideration of its own first system time 210, the received second system time 219 and the known first transmission and processing time delay 212 using the following equation:

$$211 = 210 - (219 + 212)$$

In a next step 511, the first base station 202 recalculates the time information respectively the time stamps t_b of the beacon timing data 220 in consideration of the calculated first system time offset 211 and calculates time stamps t_b_a using the following equation and stores the result as first recalculated beacon timing data 220a in the first register 208:

$$t\_b\_a = t\_b - 211$$

In a next step 512, the first base station 202 forwards the first recalculated beacon timing data 220a and the current first system time 210 in a beacon timing data answer 51 3 to the mobile station 204. In a further step 514, the mobile station 204 receives the beacon timing data answer 513. In a next step 515, the mobile station 204 calculates the second system time offset 227 in consideration of its own third system time 226, the received first system time 210 and the known second transmission and processing time delay 228 using the following equation:

$$227 = 226 - (210 + 228)$$

In a further step 516, the mobile station 204 recalculates the time information respectively the time stamps t_b_a of the first recalculated beacon timing data 220a in consideration of the calculated second system time offset 227 and calculates time stamps t_b_b using the following equation and stores the result as second recalculated beacon timing data 220b in the third register 224:

$$t\_b\_b = t\_b\_a - 227$$

In a final step 517, the mobile station 204 adjusts at least one time slot to be able to measure at least one of the next beacons 232 broadcasted by the second base station 203 using the second recalculated beacon timing data 220b. This adjustment is clarified in the previous paragraphs with the description according to figure 4.

In a third preferred embodiment of the invention it is a method further comprising the step of scheduling at said first base station at least one transmission break for data of said one of said mobile stations taking into account said beacon timing data, wherein said method further comprises the step of deleting information of said beacon timing data at said first base station in such a way that said scheduled transmission breaks are the only components of said beacon timing data.

Such method in accordance with the third preferred embodiment of the invention is preferably used for measurements within a radio access technology, if a mobile station has only one receiver chain and the serving base station should avoid retransmission of downlink user data. Such retransmission is required if the user data have been transmitted during the measurement procedure for the neighbouring base station at the mobile station, in which case the mobile station cannot receive any downlink user data at the same time. Therefore it is favourable, if the base station coordinates data transmission in downlink to the mobile station together with measurements performed by the mobile station. A further advantage of the deleting step is that no resources on the radio link are consumed for the redundant information of the beacon timing data.

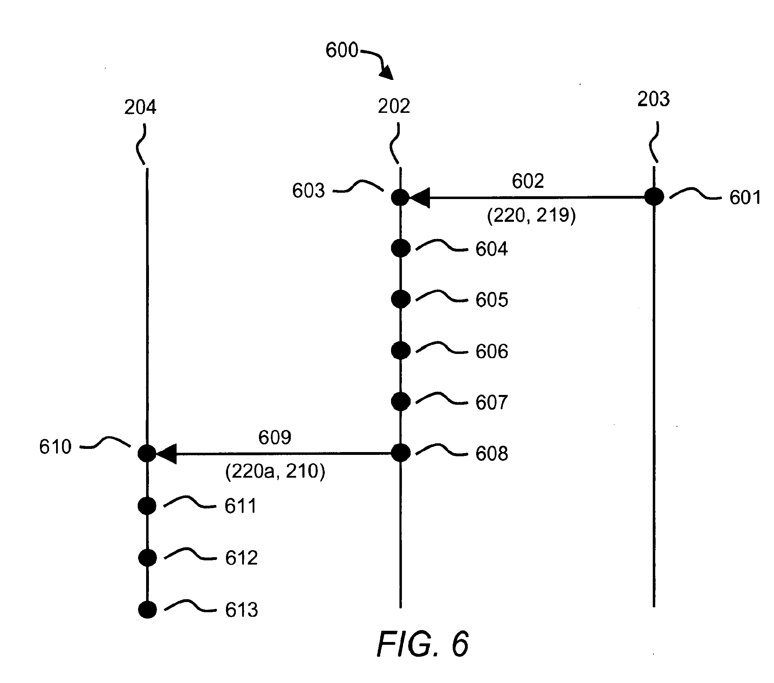

Figure 6 shows in a sequence of operation diagram 600 a method for preparing and executing measurements at mobile stations to measure the signal quality of received beacons transmitted from neighbouring base stations in the radio communication system of Figure 2 in accordance the third preferred embodiment of the invention. The elements in the embodiment shown in figure 6 that correspond to elements of the embodiment of figure 2 have been designated by the same reference numerals.

The sequence of operation diagram 600 depicts steps 601, 603, 604, 605, 606, 607, 608, 610, 611, 612, 613 performed and messages 602, 609 exchanged between the first base station 202, the second base station 203 and the mobile station 204.

In a first step 601, the second base station 203 transmits the stored beacon timing data 220 and the current system time 219 in a message 602 to the first base station 202. In a next step 603, the first base station 202 receives the message 602. In a further step 604, the first base station 202 calculates the first system time offset 211 in consideration of its own first system time 210, the received second system time 219 and the known first transmission and processing time delay 212 using the following equation:

$$211 = 210 - (219 + 212)$$

In a next step 605, the first base station 202 recalculates the time information respectively the time stamps t_b of the beacon timing data 220 in consideration of the calculated first system time offset 211 and calculates time stamps t_b_a using the following equation and stores the result as first recalculated beacon timing data 220a in the first register 208:

$$t\_b\_a = t\_b - 211$$

In a further step 606, the first base station 202 schedules at least one transmission break taking into account the first recalculated beacon timing data 220a. This means, that the serving base station schedules no transmission break for downlink data sent to the mobile station 204 for every beacon 232 of the first recalculated beacon timing data 220a but schedules one or more transmission breaks for selected beacons 232. In a next step 607, the first base station 202 deletes information of the first recalculated beacon timing data 220a by erasing not needed time stamps so that the scheduled transmission breaks are the only components of the first recalculated beacon timing data 220a. In other words, the origin beacon timing data 220, which comprise the airtime information for several or continuous beacons in the future is reduced, so that only the airtime information for those beacons 232 remain in the first recalculated beacon timing data 220a, which beacons 232 are to be used for the scheduled transmission breaks. The scheduling of transmission breaks is for example a procedure similar to UMTS compressed mode (3GPP TS 25.215 V7.4.0 (2007-11).

In a further step 608 the first base station 202 transmits the first recalculated beacon timing data 220a and the current first system time 210 in a message 609 to the mobile station 204. The mobile station 204 receives the message 609 in step 610. In a next step 611, the mobile station 204 calculates the second system time offset 227 in consideration of its own third system time 226, the received first system time 210 and the known second transmission and processing time delay 228 using the following equation:

$$227 = 226 - (210 + 228)$$

In a further step 612, the mobile station 204 recalculates the time stamps t_b_a of the first recalculated beacon timing data 220a in consideration of the calculated second system time offset 227 and calculates time stamps t_b_b using the following equation and stores the result as second recalculated beacon timing data 220b in the third register 224:

$$t\_b\_b = t\_b\_a - 227$$

In a final step 613, the mobile station 204 adjusts at least one time slot to be able to measure at least one of the next beacons 232 broadcasted by the second base station 203 using the second recalculated beacon timing data 220b. This adjustment is clarified in the previous paragraphs with the description according to figure 4.

In a fourth preferred embodiment of the invention the airtime of the beacons broadcasted by the second base station and the system times used at the first base station, the second base station and the mobile station are synchronized using satellite or ground based timing modules at the first base station, the second base station and the mobile station. Such time synchronization method provides the highest accuracy. The timing modules provide a time reference in the first base station, the second base station and the mobile station. The time reference can be used to adapt the system times of the first base station, the second base station and the mobile station to said time reference. By using such method the system time of the mobile station is automatically synchronized to the airtime of the beacons broadcasted by the second base station.

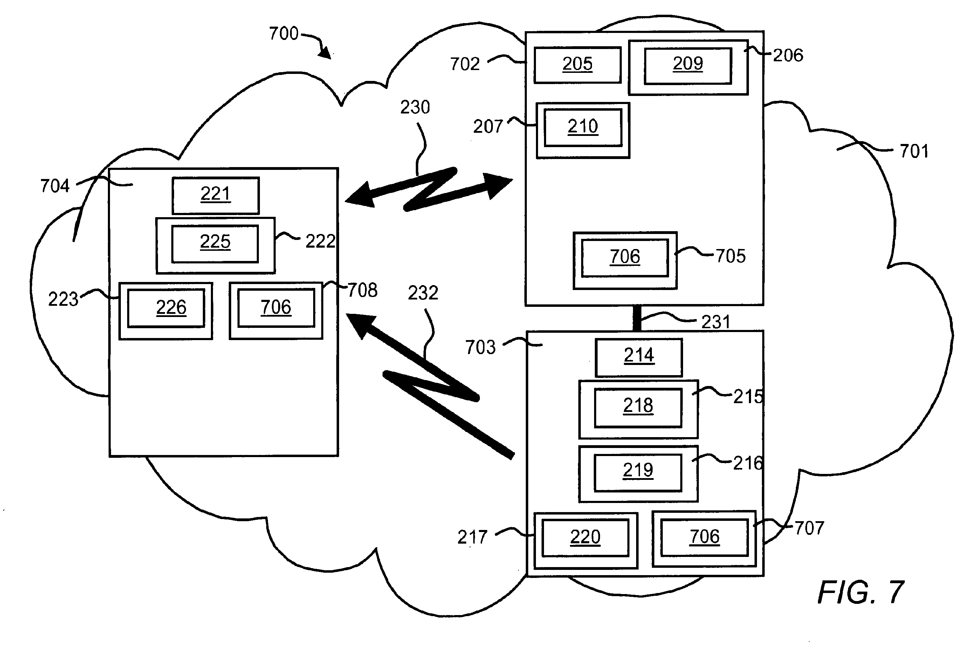

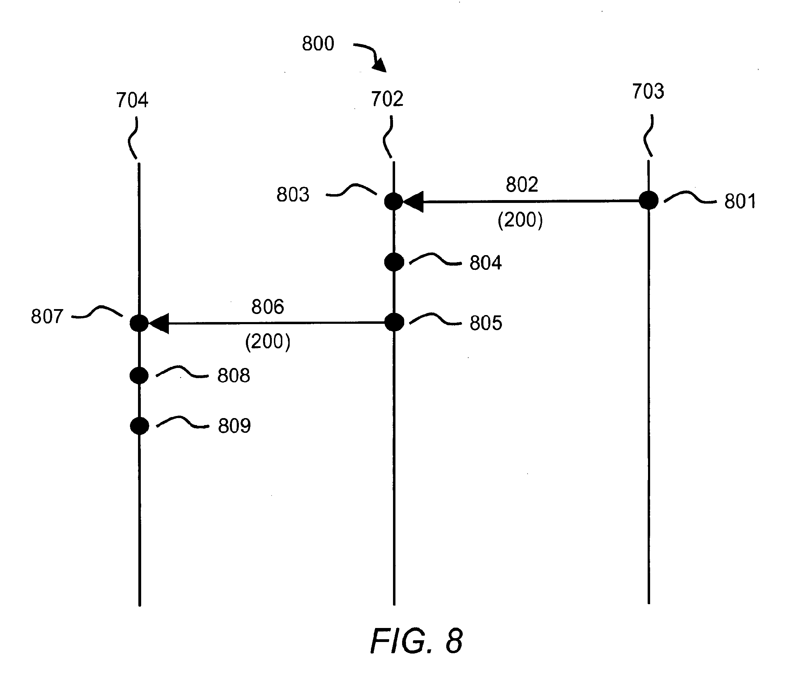

Figure 7 shows a third block diagram of a radio communication system 700 for preparing and executing measurements at mobile stations to measure the signal quality of received beacons transmitted from neighbouring base stations in accordance with the fourth preferred embodiment of the invention. Figure 8 shows in a sequence of operation diagram 800 a method for preparing and executing measurements at mobile stations to measure the signal quality of received beacons broadcasted from neighbouring base stations performed in the radio communication system 700 shown in figure 7.

The elements in the embodiment shown in figure 7 that correspond to elements of the embodiment of figure 2 have been designated by the same reference numerals.

The radio communication network 700 includes a radio access network 701, a first base station 702, a second base station 703, and a mobile station 704. Further base stations and mobile stations can be included to the radio communication system 700 but are not shown for simplification.

The first base station 702 comprises a first central processing unit (central processing unit = CPU) 205, a first storage medium 206, a first system time clock 207, and a first satellite/ground based timing module 705. The first storage medium 206 is foreseen for storing a first executable program 209, which is foreseen for executing steps of a method performed in the first base station 702 according to the fourth embodiment of the invention. The first CPU 205 is foreseen for executing the first executable program 209. The first system time clock 207 is foreseen for providing a first system time 210. The first satellite/ground based timing module 705 is foreseen for generating a time reference 706. The first system time 210 is adapted to the time reference 706.

The second base station 703 comprises a second CPU 214, a second storage medium 215, a second system time clock 216, a second register 217 and a second satellite/ground based timing module 707. The second storage medium 215 is foreseen for storing a second executable program 218, which is foreseen for executing steps of a method performed in the second base station 703 according to the fourth embodiment of the invention. The second CPU 214 is foreseen for executing the second executable program 218. The second system time clock 216 is foreseen for providing a second system time 219. The second register 217 is foreseen for storing beacon timing data 220. The beacon timing data 220 consist of time information of next beacons sent by the second base station 703. This time information can consist of time stamps with time t_b for specific beacons to be sent in the future or it can consist of one time stamp with time t_b and a beacon period b_p or another combination of time parameters. The time information is based on the second system time 219 of the second base station 703. The second satellite/ground based timing module 707 generates the time reference 706. The second system time 219 is adapted to the time reference 706.

The mobile station 704 comprises a third CPU 221, a third storage medium 222, a third system time clock 223, and a third satellite/ground based timing module 708. The third storage medium 222 is foreseen for storing a third executable program 225, which is foreseen for executing steps of a method performed in the mobile station 704 according to the fourth embodiment of the invention. The third CPU 221 is foreseen for executing the third executable program 225. The third system time clock 223 is foreseen for providing a third system time 226. The third satellite/ground based timing module 708 if foreseen for generating the time reference 706. The third system time 226 is adapted to the time reference 706.

The mobile station 704 is connected to the first base station 702 via a radio link 230. The first base station 702 and the second base station 703 are connected via a direct communication link 231. The second base station 703 is foreseen for broadcasting beacons 232, which can be received and measured by the mobile station 704.

The elements in the embodiment shown in figure 8 that correspond to elements of the embodiment of figure 2 and figure 7 have been designated by the same reference numerals.

The sequence of operation diagram 800 depicts steps 801, 803, 804, 805, 807, 808, 809 performed and messages 802, 806 exchanged between the first base station 702, the second base station 703 and the mobile station 704.

In a first step 801, the second base station 703 transmits stored beacon timing data 220 and an indication for using the time reference 706 at the second base station 703 in a message 802 to the first base station 702 via the direct communication link 231. The indication can be a single flag or single bit added to the beacon timing data 220. In a next step 803, the first base station 702 receives the message 802. In a further step 804, the first base station 702 detects that the system times of the second base station 703 and the first base station 702 are adapted to the same time reference 706. In a next step 805, the first base station 702 transmits the beacon timing data 220 and an indication for using the time reference 706 at the first base station 702 in a message 806 to the mobile station 704. The indication can be a single flag or single bit added to the beacon timing data 220. In a next step 807, the mobile station 704 receives the message 806. In a further step 808, the mobile station 704 detects that the system times of the mobile station 704 and the first base station 702 are adapted to the same time reference 706. In a final step 809, the mobile station 704 adjusts at least one time slot to be able to measure at least one of the next beacons 232 broadcasted by the second base station 703 using the beacon timing data 220. This adjustment is clarified in the previous paragraphs with the description according to figure 4.

It's favourable, that the first base station, the second base station, and the mobile station use a system time adapted to a time reference being generated by a satellite or ground based timing module, because in such a case the transmission of system time information from the second base station to the first base station and from the first base station to the mobile station can be reduced to the transmission of an indication for using a time reference at the sending base station. Furthermore system time offset calculations and beacon timing data recalculations are not required at the first base station and at the mobile station.

The two time adaptation methods, described by the description and the Figure 3 for the first embodiment of the invention and by the description and Figure 7 for the fourth embodiment of the invention can be mixed up. For example, if the first base station and the second base station comprise a satellite or ground based timing module each but the mobile station does not comprise a satellite or ground based timing module, the steps 801, 803, 804 and message 802 of the method according to the fourth embodiment of the invention can be performed in the first part and the steps 306, 308, 309, 310, 311 and message 307 of the method according to the first embodiment of the invention can be performed in the second part of a method according to a fifth embodiment of the invention.

Within certain conditions, the mobile station has to measure the beacons of the second base station several times over a longer time period, e.g. the mobile station has interrupted its movement between two cells and is staying at the border of these two cells one belonging the first base station and the other belonging the second base station. In another case it is possible, that a second mobile station has to measure the beacons of the same second base station as being done by the first mobile station. In this cases the first base station can verify, whether temporarily stored beacon timing data can be used for further measurements and it can verify, whether the time information of the beacon timing data is still precisely enough for an additional measurement procedure on a mobile station. If both requirements are fulfilled, the first base station doesn't need to receive or request any new beacon timing data or any new system time information from the second base station. If the time basis of the beacon timing data of the second base station isn't precisely enough any more which is generally the case if no ground or satellite based timing modules are used, the first base station or the mobile station needs to receive or request new system time information from the second base station. If the information of the beacon timing data of the second base station stored at the first base station is outdated, the first base station needs to receive or request new system time information from the second base station.

## Claims

1. A method for preparing and executing of measurements at mobile stations to measure the signal quality of received beacons broadcasted from neighbouring base stations in a radio communication system (200, 700), said radio communication system (200, 700) comprising a radio access network (201, 701) with a first base station (202, 702), at least one second base station (203, 703), and at least one mobile station (204, 704), said first base station (202, 702) being a serving base station of said one of said mobile stations (204, 704), said one of said second base stations (203, 703) broadcasting beacons (232) repeatedly, the method comprising the steps of:

> - transmitting beacon timing data (220) from said one of said second base stations (203, 703) to said first base station (202, 702) via a direct communication link (231),
> - transmitting beacon timing data (220, 220a) from said first base station (202, 702) to said one of said mobile stations (204, 704), and
> - adjusting at least one time slot for performing a measurement on said beacons (232) at said one of said mobile stations (204, 704) using beacon timing data (220, 220a, 220b),

> **characterized in that** said method further comprises the steps of:

> - transmitting system time information of said one of said second base stations (203, 703) from said one of said second base stations (203, 703) to said first base station (202, 702),
> - performing time adaptation at said first base station (202, 702) between said beacon timing data (220) and a first system time (210) of said first base station (202, 702) using said system time information of said one of said second base stations (203, 703),
> - transmitting system time information of said first base station (202, 702) from said first base station (202, 702) to said one of said mobile stations (204, 704), and
> - performing time adaptation at said one of said mobile stations (204, 704) between said beacon timing data (220, 220a) and a third system time (226) of said one of said mobile stations (204, 704) using said system time information of said first base station (202, 702).

**2.** The method according to claim 1, wherein said system time information of said one of said second base stations (203) comprises a second system time (219) of said one of said second base stations (203), and wherein said time adaptation at said first base station (202) is performed by the steps of:

- calculating at said first base station (202) a first system time offset (211) between said second system time (219) and said first system time (210) in consideration of said first system time (210) and said second system time (219),
- recalculating at said first base station (202) time stamps of said beacon timing data (220) in consideration of said first system time offset (211) and
- using the result as first recalculated beacon timing data (220a).

**3.** The method according to claim 1, wherein said system time information of said first base station (202) comprises said first system time (210), and wherein said time adaptation at said one of said mobile stations (203) is performed by the steps of:

- calculating at said one of said mobile stations (204) a second system time offset (227) between said first system time (210) and said third system time (226) in consideration of said third system time (226) and said first system time (210),
- recalculating at said one of said mobile stations (204) time stamps of said beacon timing data (220, 220a) in consideration of said second system time offset (227) and
- using the result as second recalculated beacon timing data (220b).

**4.** The method according to claim 1, wherein said system time information of said one of said second base stations (703) comprises an indication for using a time reference (706) at said one of said second base stations (703), said first base station (702) further comprises a first satellite or ground based timing module (705) for generating said time reference (706), said first system time (210) is adapted to said time reference (706) and said one of said second base stations (703) further comprises a second satellite or ground based timing module (707) for generating said time reference (706) and said second system time (219) is adapted to said time reference (706),
said time adaptation at said first base station (702) is performed by the step of detecting at said first base station (702) that said second system time (219) and said first system time (210) are adapted to said time reference (706).

**5.** The method according to claim 1, wherein said system time information of said first base station (702) comprises an indication for using a time reference (706) at said first base station (702), said first base station (702) further comprises a first satellite or ground based timing module (705) for generating said time reference (706), said first system time (210) is adapted to said time reference (706) and said one of said mobile stations (704) further comprises a third satellite or ground based timing module (708) for generating said time reference (706) and said third system time (226) is adapted to said time reference (706),
said time adaptation at said one of said mobile stations (703) is performed by the step of detecting at said one of said mobile stations (704) that said first system time (210) and said third system time (226) are adapted to said time reference (706).

**6.** The method according to claim 1, **characterized in** the method further comprising the step of forwarding a beacon timing data request (502) by said first base station (202, 702) from said one of said mobile stations (204, 704) to said one of said second base stations (203, 703) via said direct communication link (231).

**7.** The method according to claim 1, **characterized in** the method further comprising the steps of scheduling at said first base station (202, 702) at least one transmission break for data of said one of said mobile stations (204, 704) taking into account said beacon timing data (220, 220a) and deleting information of said beacon timing data (220, 220a) at said first base station (202, 702) in such a way that said scheduled transmission breaks are the only components of said beacon timing data (220, 220a).

**8.** A radio communication system (200, 700) for preparing and executing measurements at mobile stations to measure the signal quality of received beacons broadcasted from neighbouring base stations, said radio communication system (200, 700) comprising a radio access network (201, 701) with a first base station (202, 702), at least one second base station (203, 703), and at least one mobile station (204, 704), said first base station (202, 702) being a serving base station of said one of said mobile stations (204, 704), said one of said second base stations (203, 703) broadcasting beacons (232) repeatedly, the radio communication system (200, 700) further comprising:

- means for transmitting said beacon timing data (220) from said one of said second base stations (203, 703) to said first base station (202, 702) via a direct communication link (231),
- means for performing time adaptation at said first base station (202, 702) between said beacon timing data (220) and a first system time (210) of said first base station (202, 702),
- means for transmitting beacon timing data (220, 220a) from said first base station (202, 702) to said one of said mobile stations (204, 704), means for performing time adaptation at said one of said mobile stations (204, 704) between said beacon timing data (220, 220a) and said third system time (226), and
- means for adjusting at least one time slot for performing a measurement on said beacons (232) at said one of said mobile stations (204, 704) using said beacon timing data (220) or recalculated beacon timing data (220a, 220b),

**characterized in that** said radio communication system (200, 700) further comprises:

- means for transmitting system time information of said one of said second base stations (203, 703) from said one of said second base stations (203, 703) to said first base station (202, 702),
- means for performing time adaptation at said first base station (202, 702) between said beacon timing data (220) and a first system time (210) of said first base station (202, 702) using said system time information of said one of said second base stations (203, 703),
- means for transmitting system time information of said first base station (202, 702) from said first base station (202, 702) to said one of said mobile stations (204, 704), and
- means for performing time adaptation at said one of said mobile stations (204, 704) between said beacon timing data (220, 220a) and a third system time (226) of said one of said mobile stations (204, 704) using said system time information of said first base station (202, 702).

9. A base station (202, 203, 702, 703) for use in a radio communication system (200, 700), said base station (202, 203, 702, 703) broadcasting beacons (232) repeatedly, said base station (202, 203, 702, 703) comprising:

- means for receiving beacon timing data (220), and
- means for transmitting beacon timing data (220, 220a),

**characterized in that** said base station (202, 203, 702, 703) further comprises:

- means for receiving system time information, and
- means for performing time adaptation between said beacon timing data (220) and a system time (210, 219) of said base station (202, 203, 702, 703) using said system time information.

10. A mobile station (204, 704) for use in a radio communication system (200, 700), said mobile station (204, 704) comprises:

- means for receiving beacon timing data (220, 220a), and
- means for adjusting at least one time slot for performing a measurement on said beacons (232) using said beacon timing data (220) or recalculated beacon timing data (220a, 220b),

**characterized in that** said mobile station (204, 704) further comprises:

- means for receiving a system time information, and
- means for performing time adaptation between said beacon timing data (220, 220a) and a third system time (226) of said mobile station (204, 704) using said system time information.

**Patentansprüche**

1. Ein Verfahren zum Vorbereiten und Ausführen von Messungen an Mobilstationen, um die Signalqualität von von benachbarten Basisstationen in einem Funkkommunikationssystem (200, 700) gesendeten Baken zu messen, wobei das besagte Funkkommunikationssystem (200, 700) ein Funkzugangsnetz (201, 701) mit einer ersten Basisstation (202, 702), mindestens einer zweiten Basisstation (203, 703) und mindestens einer Mobilstation (204, 704) umfasst, wobei die besagte erste Basisstation (202, 702) eine bedienende Basisstation der besagten einen der besagten Mobilstationen (204, 704) ist, wobei eine der besagten zweiten Basisstationen (203, 703) wiederholt Baken (232) aussendet, wobei das Verfahren die folgenden Schritte umfasst:

- Übertragen von Baken-Terminierungsdaten (220) von der besagten einen der besagten zweiten Basisstationen (203, 703) an die besagte erste Basisstation (202, 702) über einen Direktkommunikations-Link (231),
- Übertragen von Baken-Terminierungsdaten (220, 220a) von der besagten ersten Basisstation (202, 702) an die besagte eine der besagten Mobilstationen (204, 704), und
- Einstellen mindestens eines Zeitschlitzes zum Ausführen einer Messung auf den besagten Baken (232) an der besagten einen der besagten Mobilstationen (204, 704) unter Verwendung von Baken-Terminierungsdaten (220, 220a, 220b),

**dadurch gekennzeichnet, dass** das besagte Verfahren weiterhin die folgenden Schritte umfasst:

- Übertragen von Systemzeitinformation der besagten einen der besagten zweiten Basisstationen (203, 703) von der besagten einen der besagten zweiten Basisstationen (203, 703) an die besagte erste Basisstation (202, 702),
- Durchführen der Zeitanpassung an der besagten ersten Basisstation (202, 702) zwischen den besagten Baken-Terminierungsdaten (220) und einer ersten Systemzeit (210) der besagten ersten Basisstation (202, 702) unter Verwendung der besagten Systemzeitinformation der besagten einen der besagten zweiten Basisstationen (203, 703),
- Übertragen der Systemzeitinformation der besagten ersten Basisstation (202, 702) von der besagten ersten Basisstation (202, 702) an die besagte eine der besagten Mobilstationen (204, 704), und
- Durchführen der Zeitanpassung an der besagten einen der besagten Mobilstationen (204, 704) zwischen den besagten Baken-Terminierungsdaten (220, 220a) und einer dritten Systemzeit (226) der besagten einen der besagten Mobilstationen (204, 704) unter Verwendung der besagten Systemzeitinformation der besagten ersten Basisstation (202, 702).

2. Das Verfahren nach Anspruch 1, wobei die besagte Systemzeitinformation der besagten einen der besagten zweiten Basisstationen (203) eine zweite Systemzeit (219) der besagten einen der besagten zweiten Basisstationen (203) enthält, und wobei die besagte Zeitanpassung an der besagten ersten Basisstation (202) durch die folgenden Schritte durchgeführt wird:

- Berechnen, an der besagten ersten Basisstation (202), eines ersten Systemzeitversatzes (211) zwischen der besagten zweiten Systemzeit (219) und der besagten ersten Systemzeit (210) unter Berücksichtigung der besagten ersten Systemzeit (210) und der besagten zweiten Systemzeit (219),
- Neuberechnen, an der besagten ersten Basisstation (202), von Zeitstempeln der besagten Baken-Terminierungsdaten (220) unter Berücksichtigung des besagten ersten Systemzeitversatzes (211), und
- Verwenden des Ergebnisses als erste neu berechnete Baken-Terminierungsdaten (220a).

3. Das Verfahren nach Anspruch 1, wobei die besagte Systemzeitinformation der besagten ersten Basisstation (202) die besagte erste Systemzeit (210) enthält, und wobei die besagte Zeitanpassung an der besagten einen der besagten Mobilstationen (203) durch die folgenden Schritte durchgeführt wird:

- Berechnen, an der besagten einen der besagten Mobilstationen (204), eines zweiten Systemzeitversatzes (227) zwischen der besagten ersten Systemzeit (210) und der besagten dritten Systemzeit (226) unter Berücksichtigung der besagten dritten Systemzeit (226) und der besagten ersten Systemzeit (210),
- Neuberechnen, an der besagten einen der besagten Mobilstationen (204), von Zeitstempeln der besagten Baken-Terminierungsdaten (220, 220a) unter Berücksichtigung des besagten zweiten Systemzeitversatzes (227), und
- Verwenden des Ergebnisses als zweite neu berechnete Baken-Terminierungsdaten (220b).

4. Das Verfahren nach Anspruch 1, wobei die besagte Systemzeitinformation der besagten einen der besagten zweiten Basisstationen (703) eine Angabe für die Verwendung einer Zeitreferenz (706) an der besagten einen der besagten zweiten Basisstationen (703) enthält, wobei die besagte erste Basisstation (702) weiterhin ein erstes satellitengestütztes oder bodenbasiertes Zeitsteuerungsmodul (705) zum Erzeugen der besagten Zeitreferenz (706) umfasst, wobei die besagte erste Systemzeit (210) an die besagte Zeitreferenz (706) angepasst wird, und wobei die besagte eine der besagten zweiten Basisstationen (703) weiterhin ein zweites satellitengestütztes oder bodenbasiertes Zeitsteuerungsmodul (707) zum Erzeugen der besagten Zeitreferenz (706) umfasst, und wobei die besagte zweite Systemzeit (219) an die besagte Zeitreferenz (706) angepasst wird,
wobei die Zeitanpassung an der besagten ersten Basisstation (702) durch den Schritt des Erkennens, an der besagten ersten Basisstation (702), dass die besagte zweite Systemzeit (219) und die besagte erste Systemzeit (210) an die besagte Zeitreferenz (706) angepasst sind, durchgeführt wird.

5. Das Verfahren nach Anspruch 1, wobei die besagte Systemzeitinformation der besagten ersten Basisstation (702) eine Angabe für die Verwendung einer Zeitreferenz (706) an der besagten ersten Basisstation (702) enthält, wobei die besagte erste Basisstation (702) weiterhin ein erstes satellitengestütztes oder bodenbasiertes Zeitsteuerungsmodul (705) zum Erzeugen der besagten Zeitreferenz (706) umfasst, wobei die besagte erste Systemzeit (210) an die besagte Zeitreferenz (706) angepasst wird, und wobei die besagte eine der besagten Mobilstationen (704) weiterhin ein drittes satellitengestütztes oder bodenbasiertes Zeitsteuerungsmodul (708) zum Erzeugen der besagten Zeitreferenz (706) umfasst, und wobei die besagte dritte Systemzeit (226) an die besagte Zeitreferenz (706) angepasst wird, wobei die besagte Zeitanpassung an der besagten einen der besagten Mobilstationen (703) durch den Schritt des Erkennens, an der besagten einen der besagten Mobilstationen (704), dass die besagte erste Systemzeit (210) und die besagte dritte Systemzeit (226) an die besagte Zeitreferenz (706) angepasst sind, durchgeführt wird.

6. Das Verfahren nach Anspruch 1, **dadurch gekennzeichnet, dass** das Verfahren weiterhin den Schritt des Weiterleitens einer Baken-Terminierungsdatenanforderung (502) durch die besagte erste Basisstation (202, 702) von der besagten einen der besagten Mobilstationen (204, 704) an die besagte eine der besagten zweiten Basisstationen (203, 703) über den besagten Direktkommunikations-Link (231) umfasst.

7. Das Verfahren nach Anspruch 1, **dadurch gekennzeichnet, dass** das Verfahren weiterhin die folgenden Schritte umfasst:

   Terminieren, an der besagten ersten Basisstation (202, 702), mindestens einer Übertragungspause für Daten der besagten mindestens einen der besagten Mobilstationen (204, 704) unter Berücksichtigung der besagten Baken-Terminierungsdaten (220, 220a), und
   Löschen der Informationen der besagten Baken-Terminierungsdaten (220, 220a) an der besagten ersten Basisstation (202, 702), so dass die terminierten Übertragungsunterbrechungen die einzigen Komponenten der besagten Baken-Terminierungsdaten (220, 220a) sind.

8. Ein Funkkommunikationssystem (200, 700) zum Vorbereiten und Ausführen von Messungen an Mobilstationen, um die Signalqualität von von benachbarten Basisstationen empfangenen Baken zu messen, wobei das besagte Funkkommunikationssystem (200, 700) ein Funkzugangsnetz (201, 701) mit einer ersten Basisstation (202, 702), mindestens einer zweiten Basisstation (203, 703), und mindestens einer Mobilstation (204, 704) umfasst, wobei die besagte erste Basisstation (202, 702) eine bedienende Basisstation der besagten einen der besagten Mobilstationen (204, 704) ist, wobei eine der besagten zweiten Basisstationen (203, 703) wiederholt Baken (232) aussendet, wobei das Funkkommunikationssystem (200, 700) weiterhin umfasst:

   - Mittel zum Übertragen von Baken-Terminierungsdaten (220) von der besagten einen der besagten zweiten Basisstationen (203, 703) an die besagte erste Basisstation (202, 702) über einen Direktkommunikations-Link (231),
   - Mittel zum Durchführen der Zeitanpassung an der besagten ersten Basisstation (202, 702) zwischen den besagten Baken-Terminierungsdaten (220) und einer ersten Systemzeit (210) der besagten ersten Basisstation (202, 702),
   - Mittel zum Übertragen von Baken-Terminierungsdaten (220, 220a) von der besagten ersten Basisstation (202, 702) an die besagte eine der besagten Mobilstationen (204, 704),
   - Mittel zum Durchführen der Zeitanpassung an der besagten einen der besagten Mobilstationen (204, 704) zwischen den besagten Baken-Terminierungsdaten (220, 220a) und der besagten dritten Systemzeit (226), und
   - Mittel zum Einstellen mindestens eines Zeitschlitzes zum Ausführen einer Messung auf den besagten Baken (232) an der besagten einen der besagten Mobilstationen (204, 704) unter Verwendung der besagten Baken-Terminierungsdaten (220) oder der neu berechneten Baken-Terminierungsdaten (220a, 220b),

   **dadurch gekennzeichnet, dass** das besagte Funkkommunikationssystem (200, 700) weiterhin umfasst:

   - Mittel zum Übertragen von Systemzeitinformation der besagten einen der besagten zweiten Basisstationen (203, 703) von der besagten einen der besagten zweiten Basisstationen (203, 703) an die besagte erste Basisstation (202, 702),
   - Mittel zum Ausführen der Zeitanpassung an der besagten ersten Basisstation (202, 702) zwischen den besagten Baken-Terminierungsdaten (220) und einer ersten Systemzeit (210) der besagten ersten Basisstation (202, 702) unter Verwendung der besagten Systemzeitinformation der besagten einen der besagten zweiten Basisstationen (203, 703),
   - Mittel zum Übertragen von Systemzeitinformation der besagten ersten Basisstation (202, 702) von der besagten ersten Basisstation (202, 702) an die besagte eine der besagten Mobilstationen (204, 704), und
   - Mittel zum Durchführen der Zeitanpassung an der besagten einen der besagten Mobilstationen (204, 704) zwischen den besagten Baken-Terminierungsdaten (220, 220a) und einer dritten Systemzeit (226) der besagten einen der besagten Mobilstationen (204, 704) unter Verwendung der besagten Systemzeitinformation der besagten ersten Basisstation (202, 702).

9. Eine Basisstation (202, 203, 702, 703) zur Verwendung in einem Funkkommunikationssystem (200, 700), wobei die besagte Basisstation (202, 203, 702, 703) wiederholt Baken sendet (232), wobei die besagte Basisstation (202, 203, 702, 703) umfasst:

- Mittel zum Empfangen von Baken-Terminierungsdaten (220), und
- Mittel zum Übertragen von Baken-Terminierungsdaten (220, 220a),

**dadurch gekennzeichnet, dass** die besagte Basisstation (202, 203, 702, 703) weiterhin umfasst:

- Mittel zum Empfangen von Systemzeitinformationen, und
- Mittel zum Durchführen einer Zeitanpassung zwischen den besagten Baken-Terminierungsdaten (220) und einer Systemzeit (210, 219) der besagten Basisstation (202, 203, 702, 703) unter Verwendung der besagten Systemzeitinformation.

10. Eine Mobilstation (204, 704) zur Verwendung in einem Funkkommunikationssystem (200, 700), wobei die besagte Mobilstation (204, 704) umfasst:

- Mittel zum Empfangen von Baken-Terminierungsdaten (220, 220a), und
- Mittel zum Einstellen mindestens eines Zeitschlitzes zum Ausführen einer Messung auf den besagten Baken (232) unter Verwendung der besagten Baken-Terminierungsdaten (220) oder der neu berechneten Baken-Terminierungsdaten (220a, 220b),

**dadurch gekennzeichnet, dass** die besagte Mobilstation (204, 704) weiterhin umfasst:

- Mittel zum Empfangen einer Systemzeitinformation, und
- Mittel zum Durchführen einer Zeitanpassung zwischen den besagten Baken-Terminierungsdaten (220, 220a) und einer dritten Systemzeit (226) der besagten Mobilstation (204, 704) unter Verwendung der besagten Systemzeitinformation.

## Revendications

1. Procédé de préparation et d'exécution de mesures au niveau des stations mobiles pour mesurer la qualité de signal de balises reçues diffusées à partir de stations de base voisines dans un système de communication radio (200, 700), ledit système de communication radio (200, 700) comprenant un réseau d'accès radio (201, 701) avec une première station de base (202, 702), au moins une deuxième station de base (203, 703), et au moins une station mobile (204, 704), ladite première station de base (202, 702) étant une station de base servante de ladite station parmi lesdites stations mobiles (204, 704), ladite station parmi lesdites deuxièmes stations de base (203, 703) diffusant des balises (232) de manière répétée, le procédé comprenant les étapes suivantes :

- transmettre des données de synchronisation de balise (220) entre ladite station parmi lesdites deuxièmes stations de base (203, 703) et ladite première station de base (202, 702) par l'intermédiaire d'une liaison de communication directe (231),
- transmettre des données de synchronisation de balise (220, 220a) entre ladite première station de base (202, 702) et ladite station parmi lesdites stations mobiles (204, 704), et
- régler au moins un intervalle temporel pour exécuter une mesure sur lesdites balises (232) au niveau de l'au moins une parmi lesdites stations mobiles (204, 704) en utilisant des données de synchronisation de balise (220, 220a, 220b),

**caractérisé en ce que** ledit procédé comprend en outre les étapes suivantes :

- transmettre des informations de temps de système de ladite station parmi lesdites deuxièmes stations de base (203, 703) entre ladite station parmi lesdites deuxièmes stations de base (203, 703) et ladite première station de base (202, 702),
- exécuter une adaptation temporelle au niveau de ladite première station de base (202, 702) entre lesdites données de synchronisation de balise (220) et un premier temps de système (210) de ladite première station de base (202, 702) en utilisant lesdites informations de temps de système de ladite station parmi lesdites deuxièmes stations de base (203, 703),
- transmettre des informations de temps de système de ladite première station de base (202, 702) entre ladite première station de base (202, 702) et ladite station parmi lesdites stations mobiles (204, 704), et
- exécuter une adaptation temporelle au niveau de ladite station parmi lesdites stations mobiles (204, 704) entre lesdites données de synchronisation de balise (220, 220a) et un troisième temps de système (226) de ladite station parmi lesdites stations mobiles (204, 704) en utilisant lesdites informations de temps de système de ladite première station de base (202, 702).

2. Procédé selon la revendication 1, dans lequel lesdites informations de temps de système de ladite station parmi lesdites deuxièmes stations de base (203) comprennent un deuxième temps de système (219) de ladite station parmi lesdites deuxièmes stations de base (203), et dans lequel ladite adaptation temporelle au niveau de ladite première station de base (202) est réalisée par les étapes suivantes :

- calculer au niveau de ladite première station de base (202) un premier décalage du temps de système (211) entre ledit deuxième temps de système (219) et ledit premier temps de système (210) en tenant compte dudit premier temps de système (210) et dudit deuxième temps de système (219),
- recalculer au niveau de ladite première station de base (202) des estampilles temporelles desdites données de synchronisation de balise (220) en tenant compte dudit premier décalage du temps de système (211) et
- utiliser le résultat comme première donnée de synchronisation de balise (220a) recalculée.

3. Procédé selon la revendication 1, dans lequel lesdites informations de temps de système de ladite première station de base (202) comprennent ledit premier temps de système (210), et dans lequel ladite adaptation temporelle au niveau de ladite station parmi lesdites stations mobiles (203) est réalisée par les étapes suivantes :

- calculer au niveau de ladite station parmi lesdites stations mobiles (204), un deuxième décalage du temps de système (227) entre ledit premier temps de système (210) et ledit troisième temps de système (226) en tenant compte dudit troisième temps de système (226) et dudit premier temps de système (210),
- recalculer au niveau de ladite station parmi lesdites stations mobiles (204) des estampilles temporelles desdites données de synchronisation de balise (220, 220a) en tenant compte dudit deuxième décalage du temps de système (227) et
- utiliser le résultat comme deuxième donnée de synchronisation de balise (220b) recalculée.

4. Procédé selon la revendication 1, dans lequel lesdites informations de temps de système de ladite station parmi lesdites deuxièmes stations de base (703) comprennent une indication pour utiliser une référence de temps (706) au niveau de ladite station parmi lesdites deuxièmes stations de base (703), ladite première station de base (702) comprend en outre un premier module de synchronisation satellite ou au sol (705) pour générer ladite référence de temps (706), ledit premier temps de système (210) est adapté pour ladite référence de temps (706) et ladite station parmi lesdites deuxièmes stations de base (703) comprend en outre un deuxième module de synchronisation satellite ou au sol (707) pour générer ladite référence de temps (706) et ledit deuxième temps de système (219) est adapté pour ladite référence de temps (706), ladite adaptation temporelle au niveau de ladite première station de base (702) est exécutée par l'étape consistant à détecter, au niveau de ladite première station de base (702), que ledit deuxième temps de système (219) et ledit premier temps de système (210) sont adaptés pour ladite référence de temps (706).

5. Procédé selon la revendication 1, dans lequel lesdites informations de temps de système de ladite première station de base (702) comprennent une indication pour utiliser une référence de temps (706) au niveau de ladite première station de base (702), ladite première station de base (702) comprend en outre un premier module de synchronisation satellite ou au sol (705) pour générer ladite référence de temps (706), ledit premier temps de système (210) est adapté pour ladite référence de temps (706) et ladite station parmi lesdites stations mobiles (704) comprend en outre un troisième module de synchronisation satellite ou au sol (708) pour générer ladite référence de temps (706) et ledit troisième temps de système (226) est adapté pour ladite référence de temps (706), ladite adaptation temporelle au niveau de ladite station parmi lesdites stations mobiles (703) est exécutée par l'étape consistant à détecter, au niveau de ladite station parmi lesdites stations mobiles (704), que ledit premier temps de système (210) et ledit troisième temps de système (226) sont adaptés pour ladite référence de temps (706).

6. Procédé selon la revendication 1, **caractérisé en ce que** le procédé comprend en outre l'étape consistant à transférer une demande de données de synchronisation de balise (502) par ladite première station de base (202, 702) entre ladite station parmi lesdites stations mobiles (204, 704) et ladite station parmi lesdites deuxièmes stations de base (203, 703) par l'intermédiaire de ladite liaison de communication directe (231).

7. Procédé selon la revendication 1, **caractérisé en ce que** le procédé comprend en outre les étapes suivantes

planifier au niveau de ladite première station de base (202, 702) au moins une interruption de transmission pour les données de ladite station parmi lesdites stations mobiles (204, 704) en tenant compte desdites données de synchronisation de balise (220, 220a) et supprimer les informations desdites données de synchronisation de balise (220, 220a) au niveau de ladite première station de base (202, 702) de telle sorte que lesdites interruptions de transmission planifiées soient les seuls éléments desdites données de synchronisation de balise (220, 220a).

8. Système de communication radio (200, 700) pour préparer et exécuter des mesures au niveau des stations mobiles pour mesurer la qualité de signal de balises reçues diffusées à partir de stations de base voisines, ledit système de communication radio (200, 700) comprenant un réseau d'accès radio (201, 701) avec une première station de base (202, 702), au moins une deuxième station de base (203, 703), et au moins une station mobile (204, 704), ladite première station de base (202, 702) étant une station de base servante de ladite station parmi lesdites stations mobiles (204, 704), ladite station parmi lesdites deuxièmes stations de base (203, 703) diffusant des balises (232) de manière répétée, le système de communication radio (200, 700) comprenant en outre :

- moyens pour transmettre lesdites données de synchronisation de balise (220) entre ladite station parmi lesdites deuxièmes stations de base (203, 703) et ladite première station de base (202, 702) par l'intermédiaire d'une liaison de communication directe (231),
- moyens pour exécuter une adaptation temporelle au niveau de ladite première station de base (202, 702) entre lesdites données de synchronisation de balise (220) et un premier temps de système (210) de ladite première station de base (202, 702),
- moyens pour transmettre des données de synchronisation de balise (22D, 220a) entre ladite première station de base (202, 702) et ladite station parmi lesdites stations mobiles (204, 704), moyens pour exécuter une adaptation temporelle au niveau de ladite station parmi lesdites stations mobiles (204, 704) entre lesdites données de synchronisation de balise (220, 220a) et ledit troisième temps de système (226), et
- moyens pour régler au moins un intervalle temporel pour exécuter une mesure sur lesdites balises (232) au niveau de ladite station parmi lesdites stations mobiles (204, 704) en utilisant lesdites données de synchronisation de balise (220) ou lesdites données de synchronisation de balise (220a, 220b) recalculées,

**caractérisé en ce que** ledit système de communication radio (200, 700) comprend en outre :

- moyens pour transmettre des informations de temps de système de ladite station parmi lesdites deuxièmes stations de base (203, 703) entre ladite station parmi lesdites deuxièmes stations de base (203, 703) et ladite première station de base (202, 702),
- moyens pour exécuter une adaptation temporelle au niveau de ladite première station de base (202, 702) entre lesdites données de synchronisation de balise (220) et un premier temps de système (210) de ladite première station de base (202, 702) en utilisant lesdites informations de temps de système de ladite station parmi lesdites deuxièmes stations de base (203, 703),
- moyens pour transmettre des informations de temps de système de ladite première station de base (202, 702) entre ladite première station de base (202, 702) et ladite station parmi lesdites stations mobiles (204, 704), et
- moyens pour exécuter une adaptation temporelle au niveau de ladite station parmi lesdites stations mobiles (204, 704) entre lesdites données de synchronisation de balise (220, 220a) et un troisième temps de système (226) de ladite station parmi lesdites stations mobiles (204, 704) en utilisant lesdites informations de temps de système de ladite première station de base (202, 702).

9. Station de base (202, 203, 702, 703) à utiliser dans un système de communication radio (200, 700), ladite station de base (202, 203, 702, 703) diffusant des balises (232) de manière répétée, ladite station de base (202, 203, 702, 703) comprenant :

- moyens pour recevoir des données de synchronisation de balise (220), et
- moyens pour transmettre des données de synchronisation de balise (220, 220a),

**caractérisée en ce que** ladite station de base (202, 203, 702, 703) comprend en outre :

- moyens pour recevoir des informations de temps de système, et
- moyens pour exécuter une adaptation temporelle entre lesdites données de synchronisation de balise (220) et un temps de système (210, 219) de ladite station de base (202, 203, 702, 703) en utilisant lesdites informations de temps de système.

10. Station mobile (204, 704) à utiliser dans un système de communication radio (200, 700), ladite station mobile (204, 704) comprenant :

- moyens pour recevoir des données de synchronisation de balise (220, 220a), et
- moyens pour régler au moins un intervalle temporel pour exécuter une mesure sur lesdites balises (232) en utilisant lesdites données de synchronisation de balise (220) ou lesdites données de synchronisation de balise (220a, 220b) recalculées,

**caractérisée en ce que** ladite station mobile (204, 704) comprend en outre :

- moyens pour recevoir une information de temps de système, et
- moyens pour exécuter une adaptation temporelle entre lesdites données de synchronisation de balise (220, 220a) et un troisième temps de système (226) de ladite station mobile (204, 704) en utilisant ladite information de temps de système.

100

103

104

101

106

107

105

108

102

*(prior art)*

*FIG. 1*

*FIG. 2*

EP 2 109 333 B1

FIG. 3

EP 2 109 333 B1

*FIG. 4*

EP 2 109 333 B1

FIG. 5

FIG. 6

EP 2 109 333 B1

FIG. 7

704　　　　　　　　702　　　　　　　　703

803　　　　　　　802　　　801
　　　　　　　　　(200)

804

807　　　　806　　　805
　　　　　(200)

808

809

*FIG. 8*

**EP 2 109 333 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 202005010882 U1